# EUROPEAN PATENT APPLICATION

(11) **EP 2 547 135 A2**
(43) Date of publication of application: **16.01.2013**
(21) Application number: 12176212.4
(22) Date of filing: 12.07.2012
(51) Int. Cl.: H04W 12/12, H04W 12/06

(54) **Apparatus and method for preventing copying of terminal unique information in portable terminal**

(30) Priority: 13.07.2011 KR 20110069640
(71) Applicant: Samsung Electronics Co., Ltd., Suwon-si, Gyeonggi-do, 443-742 (KR)
(72) Inventor: Lee, Ji-Hyun, 443-742 Gyeonggi-do (KR); Jung, Hyung-Chul, 443-742 Gyeonggi-do (KR); Rim, Heung-Soon, 443-742 Gyeonggi-do (KR); Cho, Sung-Kyu, 443-742 Gyeonggi-do (KR)
(74) Representative: Jenkins, Richard Gavin

(57) **Abstract**

An apparatus and a method for preventing copying of terminal unique information in a portable terminal are provided. The method includes storing a root public key for certifying the terminal unique information and a first model class ID of the portable terminal in an One-Time Programmable (OTP) region, encrypting the terminal unique information and certification information of the terminal unique information for certifying the terminal unique information with a terminal unique value and storing the encrypted terminal unique information and the encrypted certification information thereof, obtaining the certification information based on the root public key if certification with respect to the terminal unique information is requested, and certifying the terminal unique information based on the certification information.

## Description

### Field of the Invention:

The present invention relates to a portable terminal. More particularly, the present invention relates to an apparatus and method for preventing copying of a terminal unique information in a portable terminal.

### 2. Description of the Related Art:

Portable terminal have various functions, such as a camera function, an MP3 function, an Internet banking function, etc., as well as a simple communication function. As functions of the portable terminal have become diversified and sophisticated, the price of the portable terminal has also risen.

However, due to the forgery and alteration of terminal unique information of the portable terminal, the portable terminal is often used maliciously. To prevent the illegal use of the portable terminal, forgery and alteration of the terminal unique information should be impossible.

Accordingly, there is a need to prevent the forgery and alteration of the terminal unique information.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for preventing the forgery and alteration of terminal unique information to prevent illegal use of a portable terminal by stealth.

Another aspect of the present invention is to provide a method and apparatus for preventing the forgery and alteration of terminal unique information by using a signature of the terminal unique information to prevent illegal use of a portable terminal by stealth.

According to an aspect of the present invention, an apparatus for preventing copying of terminal unique information in a portable terminal is provided. The apparatus including a memory unit and a controller. The memory unit stores a root public key for certifying the terminal unique information and a first model class ID of the portable terminal in a One-Time Programmable (OTP) region, encrypts the terminal unique information and certification information of the terminal unique information for certifying the terminal unique information with a terminal unique value, and stores the encrypted terminal unique information and certification information thereof. The controller obtains the certification information based on the root public key if certification with respect to the terminal unique information is requested, and certifies the terminal unique information based on the certification information.

According to another aspect of the present invention, a method for preventing copying of terminal unique information in a portable terminal is provided. The method includes storing a root public key for certifying the terminal unique information and a first model class ID of the portable terminal in a One-Time Programmable (OTP) region, encrypting the terminal unique information and certification information of the terminal unique information for certifying the terminal unique information with a terminal unique value and storing the encrypted terminal unique information and the encrypted certification information thereof, obtaining the certification information based on the root public key if certification with respect to the terminal unique information is requested, and certifying the terminal unique information based on the certification information.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiment of the present invention will be more apparent from the following description taken in conjunction with the accompanying drawings, in which:
FIG. 1 is a block diagram of a copy preventing system according to an exemplary embodiment of the present invention;
FIG. 2 is a flowchart of a process of generating terminal unique information of a portable terminal in a copy preventing system according to an exemplary embodiment of the present invention;
FIG. 3 is a block diagram of a portable terminal according to an exemplary embodiment of the present invention;
FIG. 4 is a flowchart of a process of certifying (or authenticating) an International Mobile Equipment Identity (IMEI) by a portable terminal according to an exemplary embodiment of the present invention;
FIG. 5 is a flowchart of a process of certifying an IMEI signature by a portable terminal according to an exemplary embodiment of the present invention; and
FIG. 6 is a flowchart of a process of certifying an IMEI signature by a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENT

The following description with reference to the accompanying drawings is provided to assist in a comprehensive understanding of exemplary embodiment of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, description of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A portable terminal according to an exemplary embodiment of the present invention is a mobile electronic apparatus which is easy to carry, examples of which may include a video phone, a portable phone, a smart phone, an International Mobile Telecommunication (IMT)-2000 terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an E-book, a portable computer (a notebook, a tablet, etc.), a digital camera, and so forth.

Terminal unique information according to an exemplary embodiment of the present invention represents unique information given to a portable terminal to identify the portable terminal. For example, the terminal unique information may be an International Mobile Equipment Identity (IMEI). The IMEI is a 15-digit number generated by combining a manufacturer, a model name, and a serial number, and indicates a unique number of the portable terminal. For convenience's sake, the terminal unique information is assumed to be the IMEI. However, the terminal unique information is not limited to the IMEI.

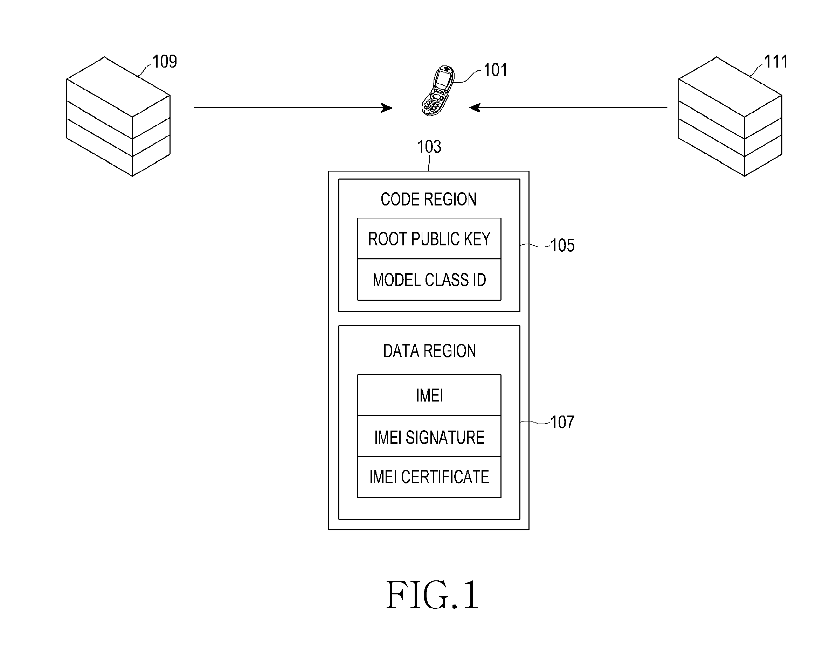

FIG. 1 is a block diagram of a copy preventing system according to an exemplary embodiment of the present invention.

Referring to FIG. 1, the copy preventing system may include a portable terminal 101, a code binary signing server 109, and an IMEI signing server 111. The portable terminal 101 stores a root public key and a model class ID in a code region 105 of a security memory unit 103.

The security memory unit 103 is a storage medium which stores information for security of the IMEI, and is divided into the code region 105 and a data region 107. The code region 105 is a region protected by secure boot, and may be a One-Time Programmable (OTP) region. The OTP region is a region in which data is recorded with hardware, so that change of the recorded data is impossible. The root public key and the model class ID are recorded in the code region 105, such that they cannot be changed.

The root public key is root certification (or authentication) information necessary for secure boot, and an IMEI certificate is obtained using the root public key. The model class ID is defined according to a model of the portable terminal, so that different signatures can be issued for different models of portable terminals. The model class ID is also generated for convenience in key management. For example, an IMEI root key may be designed to be shared between portable terminals of the same model. The root certification information includes the root public key and a root private key.

The code binary signing server 109, after generating a source code for boot, signs a boot loader, a kernel, and a modem image based on the root private key included in the root certification information, and adds the signed boot loader, kernel, and modem image to a binary stored in the portable terminal.

The boot loader drives the system through several processes, such as hardware inspection, hardware initialization, etc., and executes an Operating System (OS). The kernel is a core part of the OS, and provides various services necessary for other parts of the OS and execution of an application program. The modem image indicates specifications of a modem included in the portable terminal.

The IMEI signing server 111 generates the IMEI of the portable terminal, and generates, based on the generated IMEI, an IMEI signature and an IMEI certificate for the IMEI. The IMEI signing server 111 stores the generated IMEI, IMEI signature, and IIMEI certificate in the data region 107 of the security memory unit 103. The data region 107 is a general memory region which is not the OTP region.

If the IMEI and the IMEI signature of the portable terminal 101 are copied in another portable terminal of the same model as the portable terminal 101, the other portable terminal may recognize the copied IMEI as a valid IMEI. To prevent such copying of the IMEI, the IMEI signing server 111 encrypts the IMEI and the IMEI signature with a terminal unique value and stores the encrypted IMEI and IMEI signature. For example, the terminal unique value may be a serial number, a phone number, or the like of the portable terminal 101.

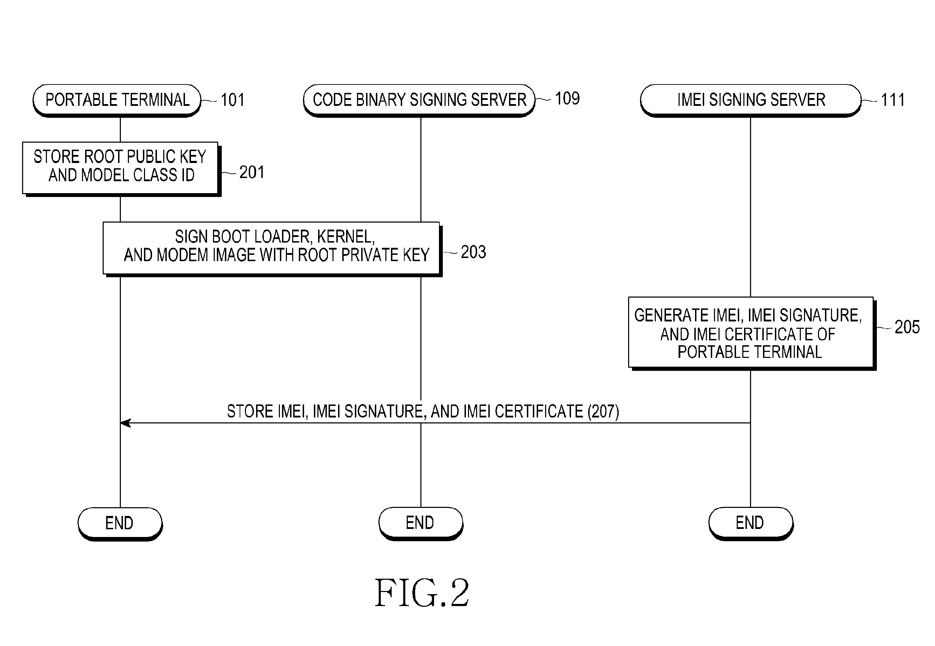

FIG. 2 is a flowchart of a process of generating terminal unique information of a portable terminal in a copy preventing system according to an exemplary embodiment of the present invention.

Referring to FIG. 2, the portable terminal 101 stores a root public key and a model class ID in the code region 105 of the security memory unit 103 in step 201.

The security memory unit 103 is a storage medium which stores information necessary for security of the IMEI, and is divided into the code region 105 and the data region 107. The code region 105 is a region protected by secure boot, and may be an OTP region. The OTP region is a region in which data is recorded with hardware, so that change of the recorded data is impossible. The root public key and the model class ID are recorded in the code region 105, such that they cannot be changed.

The root public key is root certification information necessary for secure boot, and an IMEI certificate is checked using the root public key. The model class ID is given according to a model of the portable terminal, so that different signatures can be issued for different models of portable terminals. The model class ID is also generated for convenience in key management. For example, an IMEI root key may be designed to be shared between portable terminals of the same model. The root certification information includes the root public key and a root private key.

In step 203, the code binary signing server 109, after generating a source code for boot, signs a boot loader, a kernel, and a modem image by using the root private key included in the root certification information, and adds the signed boot loader, kernel, and modem image to a binary stored in the portable terminal.

The boot loader drives the system through several processes, such as hardware inspection, hardware initialization, etc., and executes an OS. The kernel is a core part of the OS, and provides various services necessary for other parts of the OS and execution of an application program. The modem image indicates specifications of a modem included in the portable terminal.

The IMEI signing server 111 generates the IMEI of the portable terminal, and generates, based on the generated IMEI, an IMEI signature and an IMEI certificate for the IMEI in step 205.

The IMEI signing server 111 stores the generated IMEI, IMEI signature, and IIMEI certificate in the data region 107 of the security memory unit 103, in step 207. The data region 107 is a general memory region which is not the OTP region.

If the IMEI and the IMEI signature of the portable terminal 101 are copied in another portable terminal of the same model as the portable terminal 101, the other portable terminal may recognize the copied IMEI as a valid IMEI. To prevent such copying of the IMEI, the IMEI signing server 111 encrypts the IMEI and the IMEI signature with a terminal unique value and stores the encrypted IMEI and IMEI signature. For example, the terminal unique value may be a serial number, a phone number, or the like of the portable terminal 101.

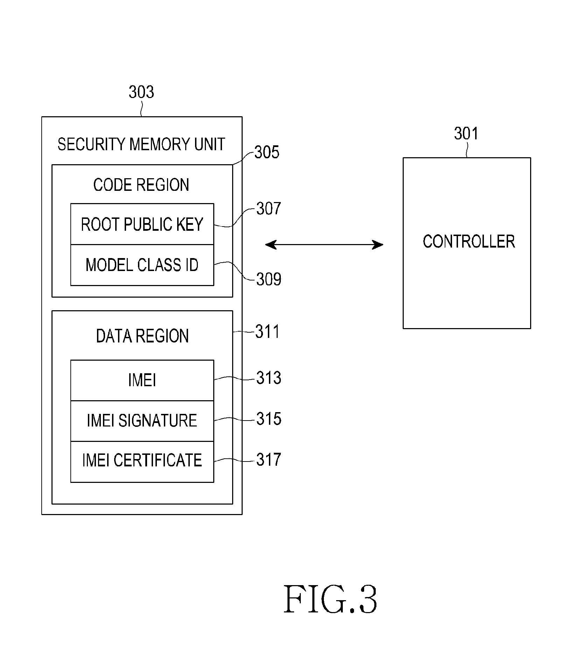

FIG. 3 is a block diagram of a portable terminal according to an exemplary embodiment of the present invention.

Referring to FIG. 3, the portable terminal 101 may include a controller 301 and a security memory unit 303. The portable terminal 101 may include additional units according to a type of the portable terminal 101. For example, if the portable terminal 101 is a mobile phone or smartphone, the portable terminal 101 may include a communication unit for communicating with a network.

The security memory unit 303 may include a code region 305 and a data region 311. The code region 305 stores a root public key 307 and a model class ID 309, and the data region 311 includes an IMEI 313, an IMEI signature 315, and an IMEI certificate 317. The code region 305 may be an OTP region, and the data region 311 may not be an OTP region. The OTP region is a region in which once data is recorded therein, the recorded data cannot be changed. Accordingly, the root public key 307 and the model class ID 309 cannot be copied and the IMEI 313, the IMEI signature 315, and the IMEI certificate 317 can be copied. To prevent such copying, the IMEI 313 and the IMEI signature 315 may be encrypted with a terminal unique value.

The IMEI signature 315 and the IMEI certificate 317 are referred to as IMEI certification (or authentication) information, and the IMEI certificate 317 includes a certificate signature and a signing key certificate. The signing key certificate includes a signing public key and the model class ID 309 of the portable terminal 101.

The controller 301 determines whether certification (or authentication) with respect to the IMEI 313 is requested. Certification with respect to the IMEI 313 may be performed when the power of the portable terminal 101 changes from an OFF state to an ON state. If certification with respect to the IMEI 313 is requested, the controller 301 performs a secure boot operation and then obtains the IMEI certificate 317 stored in the data region 311 based on the root public key 307 stored in the code region 305.

The secure boot involves verifying a signature of a binary based on the root public key 307 stored in the code region 305 before loading a binary image for boot in the memory unit 303, and loading the binary image in the memory unit 303 to perform the boot procedure if the verification succeeds. When verifying the signature of the binary, the controller 301 verifies signatures of the boot loader, the kernel, and the modem image.

In order for a malicious user to generate a valid binary (firmware), the root public key 307 stored in the security memory unit 303 also has to be changed. However, since the root public key 307 has been stored in the OTP region with hardware, it cannot be changed with software. Accordingly, success in the binary signature verification indicates that the binary has been generated by an authorized user and integrity of the binary is guaranteed.

The controller 301 obtains the IMEI signature 315 based on the signing public key included in the IMEI certificate 317. If verification of the IMEI signature 315 succeeds, the controller 301 determines that the IMEI 313 is valid.

The certification with respect to the IMEI 313 includes the following operations. The controller 301 determines whether the certification with respect to the IMEI 313 is requested. If so, the controller 301 performs the secure boot operation, and then obtains the signing key certificate included in the IMEI certificate 317.

The controller 301 obtains the IMEI certificate signature based on the root public key 307 included in the code region 305. The controller 301 may obtain the IMEI certificate signature by reflecting the root public key in an RSA algorithm, which is an encryption algorithm. The controller 301 hashes the signing key certificate. The controller 301 may hash the signing key certificate according to a Secure Hash Algorithm (SHA), such as SHA-1. The controller 301 compares the IMEI certificate signature with the hashed signing key certificate. If the IMEI certificate signature is the same as the hashed signing key certificate, the controller 301 determines that the signing key certificate has been certified (or authenticated); otherwise, the controller 301 determines that the signing key certificate has not been certified.

The controller 301 obtains the model class ID 309 of the portable terminal 101. The controller 301 detects a first model class ID stored in the code region 305 and a second model class ID included in the signing key certificate. The controller 301 compares the first model class ID with the second model class ID. If the first model class ID is the same as the second model class ID, the controller 301 determines that the first model class ID has been certified (or authenticated). If the first model class ID is not the same as the second model class ID, the controller 301 determines that the first model class ID has not been certified.

The controller 301 obtains the IMEI signature 315. The controller 301 decrypts the IMEI signature 315 stored in the data region 311 based on a terminal unique value of the portable terminal 101. The controller 301 verifies the decrypted IMEI signature based on the signing public key, thus generating a first IMEI value. The controller 301 may obtain the IMEI signature by reflecting the signing key in the RSA algorithm. The controller 301 hashes the IMEI 313, thus generating a second IMEI value. The controller 301 may hash the IMEI 313 according to SHA-1.

The controller 301 compares the first IMEI value with the second IMEI value. If the first IMEI value is the same as the second IMEI value, the controller 301 determines that the IMEI signature has been certified (or authenticated). If the first IMEI value is not the same as the second IMEI value, the controller 301 determines that the IMEI signature has not been certified. In a Public Key Infrastructure (PKI), information about a signature may be generated as a valid value only when a corresponding private key is owned. Accordingly, success in verification of the signature indicates that the information has been written by an authorized user and integrity of the information is guaranteed.

If the IMEI signature 315 has been certified, the controller 301 determines that the IMEI 313 is valid. If the IMEI signature 315 has not been certified, the controller 301 determines that the IMEI 313 is not valid.

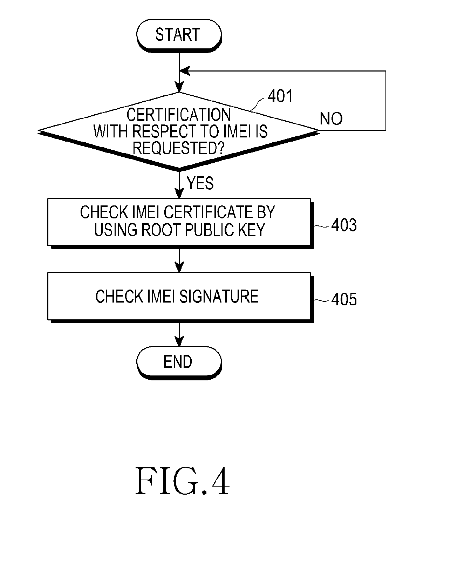

FIG. 4 is a flowchart of a process of certifying an IMEI by a portable terminal according to an exemplary embodiment of the present invention.

Referring to FIG. 4, in step 401, the controller 301 determines whether certification with respect to the IMEI 313 is requested. If certification is requested, the controller 301 goes to step 403; if certification is not requested, the controller 301 repeats step 401. The certification with respect to the IMEI 313 may be performed when the power of the portable terminal 101 changes from the OFF state to the ON state.

The controller 301 performs a secure boot operation and obtains the IMEI certificate 317 stored in the data region 311 based on the root public key 307 stored in the code region 305 in step 403.

The secure boot involves verifying a signature of a binary based on the root public key 307 stored in the code region 305 before loading a binary image for boot in the memory unit 303, and loading the binary image in the memory unit 303 to perform the boot procedure if the verification succeeds. When verifying the signature of the binary, the controller 301 verifies signatures of the boot loader, the kernel, and the modem image.

In step 405, the controller 301 obtains the IMEI signature 315 based on the signing public key included in the IMEI certificate 317. If the IMEI signature 315 has been certified, the controller 301 determines that the IMEI 313 is valid.

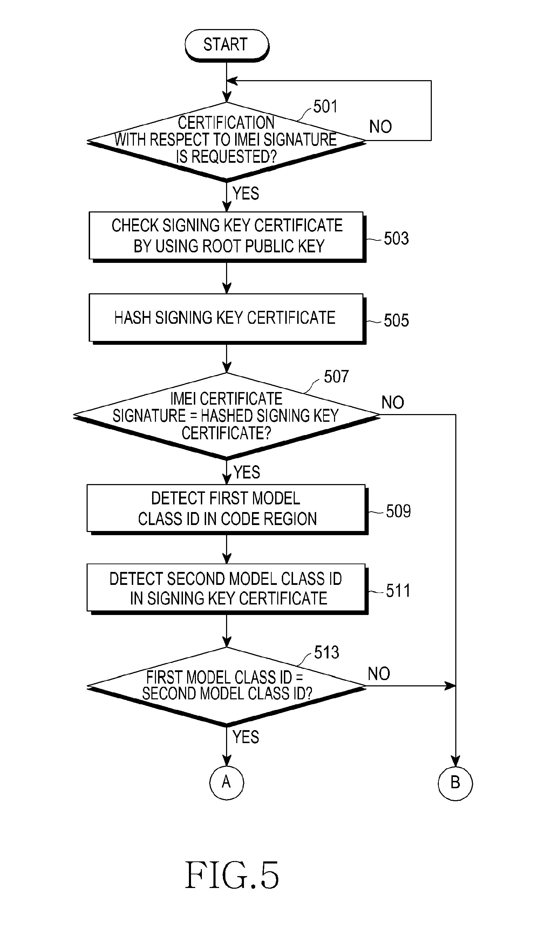

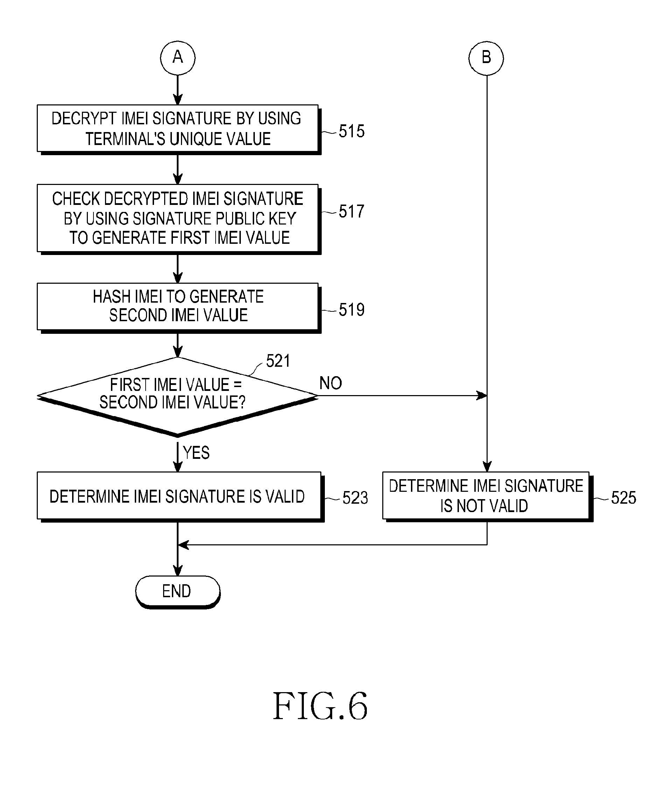

FIGs. 5 and 6 are flowcharts of a process of certifying a signature of an IMEI (IMEI signature) by a portable terminal according to an exemplary embodiment of the present invention.

Referring to FIGs. 5 and 6, in step 501, the controller 301 determines whether certification with respect to the IMEI 313 is requested. If certification is requested, the controller 301 goes to step 503; if certification is not requested, the controller 301 repeats step 501.

The controller 301 performs a secure boot operation and then obtains the signing key certificate included in the IMEI certificate 317 in step 503. The controller 301 obtains the IMEI certificate signature based on the root public key 307 included in the code region 305. The controller 301 may obtain the IMEI certificate signature by reflecting the root public key in an RSA algorithm.

The controller 301 hashes the signing key certificate in step 505. The controller 301 may hash the signing key certificate according to SHA-1.

The controller 301 compares the IMEI certificate signature with the hashed signing key certificate in step 507. If the IMEI certificate signature is the same as the hashed signing key certificate, the controller 301 determines that the signing key certificate has been certified (or authenticated) and then goes to step 509. If the IMEI certificate signature is not the same as the hashed signing key certificate, the controller 301 determines that the signing key certificate has not been certified, and then goes to step 525.

The controller 301 detects a first model class ID stored in the code region 305 in step 509. The controller 301 detects a second model class ID included in the signing key certificate in step 511.

The controller 301 compares the first model class ID with the second model class ID in step 513. If the first model class ID is the same as the second model class ID, the controller 301 determines that the first model class ID has been certified, and goes to step 515. If the first model class ID is not the same as the second model class ID, the controller 301 determines that the first model class ID has not been certified, and goes to step 525.

The controller 301 decrypts the IMEI signature 315 based on a terminal unique value in step 515. The controller 301 obtains the decrypted IMEI signature based on the signing public key, thus generating a first IMEI value, in step 517. The controller 301 may obtain the IMEI signature by reflecting the signing key in the RSA algorithm.

The controller 301 hashes the IMEI 313, thus generating a second IMEI value, in step 519. The controller 301 may hash the IMEI 313 according to SHA-1.

The controller 301 compares the first IMEI value with the second IMEI value in step 521. If the first IMEI value is the same as the second IMEI value, the controller 301 determines that the IMEI signature has been certified, and goes to step 523. If the first IMEI value is not the same as the second IMEI value, the controller 301 determines that the IMEI signature has not been certified, and goes to step 525.

In step 523, the controller 301 determines that the IMEI 313 is valid. In step 525, the controller 301 determines that the IMEI 313 is not valid if the IMEI signature 315 has not been certified.

Through the foregoing process, the portable terminal may prevent the forgery and alteration of the terminal unique information. In addition, by using the signature of the unique information, the forgery and alteration of the unique information can also be prevented.

Exemplary embodiments of the present invention propose a method and apparatus for preventing the forgery and alteration of terminal unique information to prevent illegal use of a portable terminal by stealth. Exemplary embodiments of the present invention also propose a method and apparatus for preventing the forgery and alteration of terminal unique information by using a signature of the terminal unique information to prevent illegal use of a portable terminal.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. An apparatus for preventing copying of terminal unique information in
a portable terminal, the apparatus comprising:
a memory unit for storing a root public key for certifying the terminal unique information and a first model class ID of the portable terminal in a One-Time Programmable (OTP) region, for encrypting the terminal unique information and certification information of the terminal unique information for certifying the terminal unique information with a terminal unique value, and for storing the encrypted terminal unique information and the encrypted certification information thereof; and
a controller for obtaining the certification information based on the root public key if certification with respect to the terminal unique information is requested, and for certifying the terminal unique information based on the certification information.

2. The apparatus of claim 1, wherein the terminal unique information is an International Mobile Equipment Identity (IMEI).

3. The apparatus of claim 1, wherein the controller obtains the certification information after performing a secure boot operation which comprises verifying a signature of a binary based on the root public key before loading a binary image for boot in the memory unit and loading the binary image in the memory unit to perform the boot procedure if the verification succeeds.

4. The apparatus of claim 1, wherein the certification information comprises a signature of the terminal unique information and a certificate of the terminal unique information, the certificate of the terminal unique information comprises a certificate signature and a signing key certificate, and the signing key certificate comprises a signing public key and a second model class ID.

5. The apparatus of claim 4, wherein the controller obtains the certificate signature based on the root public key, hashes the signing key certificate, compares the certificate signature with the hashed signing key certificate, and certifies the signing key certificate if the certificate signature is the same as the hashed signing key certificate.

6. The apparatus of claim 5, wherein the controller determines that the terminal unique information is not valid if the certificate signature is not the same as the hashed signing key certificate.

7. The apparatus of claim 4, wherein the controller compares the first model class ID with the second model class ID, and certifies the first model class ID if the first model class ID is the same as the second model class ID.

8. The apparatus of claim 7, wherein the controller determines that the terminal unique information is not valid if the first model class ID is not the same as the second model class ID.

9. A method for preventing copying of terminal unique information in a portable terminal, the method comprising:
storing a root public key for certifying the terminal unique information and a first model class ID of the portable terminal in a One-Time Programmable (OTP) region;
encrypting the terminal unique information and certification information of the terminal unique information for certifying the terminal unique information with a terminal unique value and storing the encrypted terminal unique information and the encrypted certification information thereof;
obtaining the certification information based on the root public key if certification with respect to the terminal unique information is requested; and
certifying the terminal unique information based on the certification information.

10. The method of claim 9, wherein the terminal unique information is an International Mobile Equipment Identity (IMEI).

11. The method of claim 9, wherein the obtaining of the certification information is performed after a secure boot operation is performed, and the secure boot operation is performed by verifying a signature of a binary based on the root public key before loading a binary image for boot in the memory unit and loading the binary image in the memory unit to perform the boot procedure if the verification succeeds.

12. The method of claim 9, wherein the certification information comprises a signature of the terminal unique information and a certificate of the terminal unique information, the certificate of the terminal unique information comprises a certificate signature and a signing key certificate, and the signing key certificate comprises a signing public key and a second model class ID.

13. The method of claim 12, wherein the obtaining of the certification information comprises:
obtaining the certificate signature based on the root public key and hashing the signing key certificate;
comparing the certificate signature with the hashed signing key certificate; and
certifying the signing key certificate if the certificate signature is the same as the hashed signing key certificate.

14. The method of claim 13, further comprising determining that the terminal unique information is not valid if the certificate signature is not the same as the hashed signing key certificate.

15. The method of claim 12, wherein the obtaining of the certification information comprises:
comparing the first model class ID with the second model class ID; and
certifying the first model class ID if the first model class ID is the same as the second model class ID.

16. The method of claim 15, further comprising determining that the terminal unique information is not valid if the first model class ID is not the same as the second model class ID.
